(19) Europäisches Patentamt
European Patent Office
Office européen des brevets

(11) **EP 4 112 678 A1**

(12) **EUROPEAN PATENT APPLICATION**
published in accordance with Art. 153(4) EPC

(43) Date of publication:
**04.01.2023 Bulletin 2023/01**

(21) Application number: **21760824.9**

(22) Date of filing: **10.02.2021**

(51) International Patent Classification (IPC):
**C08J 9/16** *(2006.01)*

(52) Cooperative Patent Classification (CPC):
**C08J 9/16**

(86) International application number:
**PCT/JP2021/004944**

(87) International publication number:
**WO 2021/172016 (02.09.2021 Gazette 2021/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.02.2020 JP 2020029600**

(71) Applicant: **Kaneka Corporation
Osaka-shi, Osaka 530-8288 (JP)**

(72) Inventor: **NAKAYAMA, Kiyotaka
Settsu-shi Osaka 566-0072 (JP)**

(74) Representative: **Vossius & Partner
Patentanwälte Rechtsanwälte mbB
Siebertstraße 3
81675 München (DE)**

(54) **POLYPROPYLENE-BASED RESIN FOAMED PARTICLES, METHOD FOR PRODUCING SAME, AND POLYPROPYLENE-BASED RESIN FOAM MOLDED BODY**

(57) The present invention relates to polypropylene resin expanded particles containing a base resin that contains a polypropylene resin. The polypropylene resin contains a propylene homopolymer having a branched structure in an amount of 40 to 85 mass%, and an α-olefin-propylene random copolymer having a melting point of 135 to 155°C in an amount of 15 to 60 mass%. The polypropylene resin expanded particles have a single melting peak in a temperature range from 130 to 170°C, and a melting heat amount in the temperature range from 130 to 170°C is 90.0% or more of a total melting heat amount in first heating in differential scanning calorimetry. The polypropylene resin expanded particles have a melting point Tm2 of 155.0 to 160.0°C, a take-up speed at break of 30.0 to 70.0 m/minute, and an open cell ratio of 30% or less. Thus, provided are polypropylene resin expanded particles that can be used to produce a polypropylene resin foam molded article having favorable moldability and high flexibility, a method for producing the same, and a polypropylene resin foam molded article.

FIG. 1

**Description**

Technical Field

The present invention relates to polypropylene resin expanded particles, a method for producing the same, and a polypropylene resin foam molded article.

BackgroundArt

In-mold foam molded articles formed by filling polypropylene resin expanded particles into a mold and then heating it with steam are characterized by being formable in a desired shape and having lightweight properties, heat-insulating properties, and the like. Such characteristics are known as the advantages of in-mold foam molded articles. Because of these characteristics, the in-mold foam molded articles made of polypropylene resin expanded particles have been used for various purposes, including heat insulating materials, cushioning packaging materials, automotive interior members, and automotive bumper cores.

As described in Patent Document 1, the polypropylene resin expanded particles to be used to form polypropylene resin foam molded articles are generally produced using what is known as a "depressurization expansion technique" as follows. That is, polypropylene resin particles are dispersed together with a volatile blowing agent in water inside a pressure-resistant container, the obtained dispersion is heated to a temperature close to the melting point of the polypropylene resin to impregnate the polypropylene-resin particles with the blowing agent, and the dispersion containing the polypropylene-resin particles and water is released to an atmosphere in which the pressure is lower than that inside the container while the inside of the container is pressurized to pressure higher than or equal to the vapor pressure of the blowing agent and the temperature and pressure inside the container are kept constant

However, in the process for producing resin expanded particles using the depressurization expansion technique, a pelletization step, that is, a step of producing pellets having a size suitable for expansion, is performed using an extruder, and then an expansion step is performed inside a pressure-resistant container. Therefore, there are problems in that, for example, capital investment tends to increase because it is necessary to perform two steps to obtain expanded particles, and wastewater treatment equipment is required because a dispersion medium such as water is used.

Therefore, in recent years, it has been proposed to use an extrusion expansion technique to produce polypropylene resin expanded particles, for the purpose of overcoming the problems of the depressurization expansion technique.

PriorArt Documents

Patent Documents

Patent Document 1:JP 2015-108033A

Disclosure of Invention

Problem to be Solved by the Invention

However, polypropylene resin expanded particles produced using the extrusion expansion technique tend to have a high open cell ratio, and thus molded articles having favorable moldability are unlikely to be obtained therefrom. When polypropylene resin expanded particles are produced using a polypropylene resin having a branched structure for the purpose of reducing the open cell ratio, there is a problem in that polypropylene resin foam molded articles obtained through in-mold molding using the polypropylene resin expanded particles have poor flexibility, and are broken when deformed just a little due to an impact or the like.

In order to solve the foregoing conventional problems, the present invention provides polypropylene resin expanded particles that can be used to produce a molded article having favorable moldability and high flexibility, a method for producing the same, and a polypropylene resin foam molded article.

Means for Solving Problem

One or more embodiments of the present invention relate to polypropylene resin expanded particles containing a base resin that contains a polypropylene resin, wherein the polypropylene resin contains a propylene homopolymer having a branched structure in an amount of 40 mass% or more and 85 mass% or less, and an $\alpha$-olefin-propylene random copolymer having a melting point of 135°C or higher and 155°C or lower in an amount of 15 mass% or more and 60 mass% or less, the polypropylene resin expanded particles have a single melting peak in a temperature range from 130°C to 170°C, and a melting heat amount in the temperature range from 130°C to 170°C is 90.0% or more of a total melting heat amount in first heating in differential scanning calorimetry, the polypropylene resin expanded particles have a melting point Tm2 of 155.0°C or higher and 160.0°C or lower, the melting point Tm2 being a melting peak value in second heating in differential scanning calorimetry, the polypropylene resin expanded particles have a take-up speed at break of 30.0 m/minute or more and 70.0 m/minute or less at 200°C, and the polypropylene resin expanded particles have an open cell ratio of 30% or less.

One or more embodiments of the present invention relate to a method for producing polypropylene resin expanded particles, and the method includes: melt-kneading a base resin containing a polypropylene resin together with a nucleating agent and a blowing agent; extruding a melt-kneaded product; and cutting the extruded melt-kneaded product to obtain polypropylene resin expanded particles, wherein the polypropylene resin contains a propylene homopolymer having a branched structure in an amount of 40 mass% or more and 85 mass% or less, and an $\alpha$-olefin-propylene random copolymer in an amount of 15 mass% or more and 60 mass% or less, the propylene homopolymer having a branched structure has a melt tension of 10 cN or more and 50 cN or less, and the $\alpha$-olefin-propylene random copolymer has a melting point of 135°C or higher and 155°C or lower and a melt flow rate of 5 g/10 minutes or more and 50 g/10 minutes or less.

One or more embodiments of the present invention relate to a polypropylene resin foam molded article comprised of polypropylene resin expanded particles, wherein the polypropylene resin expanded particles are extrusion-expanded particles containing a base resin that contains a propylene homopolymer having a branched structure in an amount of 40 mass% or more and 85 mass% or less, and has an open cell ratio of 30% or less, and the polypropylene resin foam molded article has a density D (g/L) of 60 g/L or more and 300 g/L or less, a compressive strength St (kPa) at 50% strain and the density D (g/L) satisfy Mathematical Relationship (1) below, and the polypropylene resin foam molded article has a elongation at break of 10% or more.

### Mathematical Relationship (1)

$$St \geq 0.0000525 \times D^3 + 0.0581 \times D^2 - 0.0283 \times D + 157.42$$

Effects of the Invention

The present invention can provide polypropylene resin expanded particles that can be used to produce a polypropylene resin foam molded article having favorable moldability and high flexibility.

With the method for producing polypropylene resin expanded particles according to the present invention, it is possible to simply and efficiently produce polypropylene resin expanded particles that can be used to produce a polypropylene resin foam molded article having favorable moldability and high flexibility.

The present invention can also provide a polypropylene resin foam molded article having high flexibility.

Brief Description of Drawings

[FIG. 1] FIG. 1 is an explanatory diagram illustrating the ratio (melting heat amount ratio) of the melting heat amount in the temperature range from 130°C to 170°C to the total melting heat amount on a differential scanning calorimetry curve (DSC curve) obtained in the first heating in differential scanning calorimetry performed on polypropylene resin expanded particles in one or more embodiments of the present invention.

[FIG. 2] FIG. 2 is a DSC curve obtained in the first heating in differential scanning calorimetry performed on polypropylene resin expanded particles of Example 1.

Description of Invention

The inventor of the present invention conducted extensive research to solve the foregoing problems. As a result, the inventor found that, when polypropylene resin expanded particles (also referred to merely as an "expanded particles" hereinafter) containing a base resin that contains a polypropylene resin satisfy the following conditions: the polypropylene resin contains a propylene homopolymer having a branched structure in an amount of 40 mass% or more and 85 mass% or less, and an $\alpha$-olefin-propylene random copolymer having a melting point of 135°C or higher and 155°C or lower in an amount of 15 mass% or more and 60 mass% or less; in the first heating in differential scanning calorimetry, there is a single melting peak in the temperature range from 130°C to 170°C (the melting peak value may also be referred to as "Tm1" hereinafter), and a melting heat amount in the temperature range from 130°C to 170°C is 90.0% or more of the total melting heat amount (the ratio therebetween may also be referred to merely as a "melting heat amount ratio" hereinafter); a melting point Tm2, which is a melting peak value in the second heating in differential scanning calorimetry, is 155.0°C or higher and 160.0°C or lower; a take-up speed at break at 200°C is 30.0 m/minute or more and 70.0 m/minute or less; and an open cell ratio is 30% or less, a polypropylene resin foam molded article (also referred to merely as a "foam molded article" hereinafter) made of the polypropylene resin expanded particles has favorable moldability and high flexibility, and is less likely to be broken even when deformed due to an impact or the like. In particular, when the expanded particle containing the base resin that contains a polypropylene resin satisfies the following conditions: the propylene homopolymer having a branched structure has a melt tension of 10 cN or more and 50 cN or less; and the α-olefin-propylene random copolymer has a melting point of 135°C or higher and 155°C or lower and a melt flow rate (also referred merely as "MFR" hereinafter) of 5 g/10 minutes or more and 50 g/10 minutes or less, a foam molded article made of the expanded particles has improved flexibility and is less likely to be broken even when deformed to some extent due to an impact or the like.

In one or more embodiments of the present invention, the differential scanning calorimetry curve (DSC curve) of the polypropylene resin expanded particles corresponds to an entire DSC curve that is obtained by using a differential scanning calorimeter to heat the polypropylene resin expanded particles from 40°C to 300°C at a heating rate of 10°C/minute to melt them, cool the melt thereof from 300°C to 40°C at a cooling rate of 10°C/minute to crystallize it, and heat the crystallized product from 40°C to 300°C at a heating rate of 10°C/minute again (i.e., by performing the first heating, the cooling, and the second heating in this order). The differential scanning calorimeter may be a DSC6200 model manufactured by Seiko Instruments Inc., for example. Note that this measurement may be performed using a foam molded article instead of the expanded particles.

The polypropylene resin expanded particles in one or more embodiments of the present invention have a single melting peak in the temperature range from 130°C to 170°C on the DSC curve obtained in the first heating, and the melting peak temperature is defined as the melting point Tm1. The polypropylene resin expanded particles are preferably extrusion-expanded particles. Usually, polypropylene resin expanded particles produced using the extrusion expansion technique have a single melting peak in the temperature range from 130°C to 170°C on the DSC curve in the first heating, except for the case of blending a less compatible resin thereinto.

In one or more embodiments of the present invention, the melting heat amount in the temperature range from 130°C to 170°C is 90.0% or more of the total melting heat amount on the DSC curve obtained in the first heating of the polypropylene resin expanded particles, preferably 92.0% or more thereof, more preferably 92.5% or more thereof even more preferably 93.0% or more thereof and particularly preferably 93.5% or more thereof. When the melting heat amount ratio in the temperature range from 130°C to 170°C is within the range above, a foam molded article having favorable moldability can be obtained. If the melting heat amount ratio increases in the temperature range below 130°C, expanded particles may have an increased open cell ratio and deteriorate, and the open cell ratio may increase during molding, whereas if the melting heat amount ratio increases in the temperature range above 170°C, the moldability may deteriorate. The melting heat amount in the temperature range from 130°C to 170°C on the DSC curve obtained in the first heating of the polypropylene resin expanded particles may be, but is not particularly limited to, 100% or less, or 97.0% or less, of the total melting heat amount from the viewpoint of improving the heat resistance, for example.

In one or more embodiments of the present invention, the melting heat amount ratio in the temperature range from 130°C to 170°C can be calculated as described below.

Melting Heat Amount Ratio

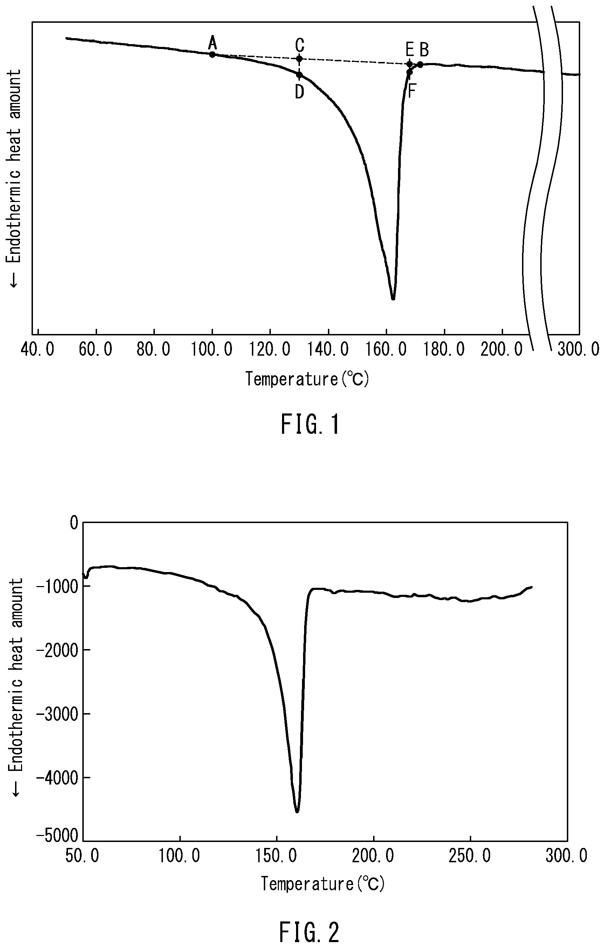

As shown in FIG. 1, a line segment AB is drawn that connects a point (point A) corresponding to 100°C and a melting end point (point B) on the DSC curve obtained in the first heating. A melting heat amount of an area enclosed by the line segment AB and the DSC curve is calculated as a total melting heat amount Q1. A straight line is drawn in parallel to the Y axis from a point (point C) corresponding to 130°C on the line segment AB onto the DSC curve, and an intersection of the straight line and the DSC curve is defined as a point D. Similarly, a straight line is drawn in parallel to the Y axis from a point (point E) corresponding to 170°C on the line segment AB onto the DSC curve, and an intersection of the straight line and the DSC curve is defined as a point F. A melting heat amount of an area enclosed by a line segment CD, a line segment CE, a line segment EF, and the DSC curve is calculated as a melting heat amount Q2 in the temperature range from 130°C to 170°C. If the melting end temperature is lower than 170°C, a melting heat amount of an area enclosed by the line segment CD, a line segment CB, and the DSC curve will be calculated as Q2. The melting heat amount ratio is calculated using Q1 and Q2 in accordance with the following equation. If a peak derived from another resin is present within the range of Q1, the melting heat amount thereof will be added to Q1 when the melting heat amount ratio is calculated.

$$\text{Melting heat amount ratio} \, (\%) = Q2 \times 100 \, / \, Q1$$

If a melting peak derived from a resin different from the polypropylene resin is present independently outside the range of Q1 on the DSC curve, the melting heat amount of the melting peak is separately determined as a melting heat amount Q3. Then, the melting heat amount ratio is calculated using Q1, Q2, and Q3 in accordance with the following equation.

$$\text{Melting heat amount ratio } (\%) = Q2 \times 100 / (Q1 + Q3)$$

In one or more embodiments of the present invention, the melting peak temperature on the DSC curve in the second heating of the polypropylene resin expanded particles is defined as a melting point Tm2, and Tm2 is 155.0°C or higher and 160.0°C or lower. When polypropylene resin expanded particles have a Tm2 of 155.0°C or higher, foam molded articles having favorable moldability can be obtained. The polypropylene resin expanded particles preferably have a Tm2 of 156.0°C or higher. When polypropylene resin expanded particles have a Tm2 of 160.0°C or lower, foam molded articles having high flexibility can be obtained.

In one or more embodiments of the present invention, the open cell ratio of the polypropylene resin expanded particles is 30% or less, preferably 25% or less, more preferably 20% or less, and even more preferably 15% or less. When the open cell ratio of the expanded particles is within the range above, foam molded articles having favorable moldability and flexibility can be obtained. Also, the open cell ratio of the polypropylene resin expanded particles may be, but is not particularly limited to, 0% or more or 3% or more, for example.

In one or more embodiments of the present invention, the take-up speed at break of the polypropylene resin expanded particles at 200°C (also referred to merely as a "take-up speed at break" hereinafter) is 30.0 m/minute or more and 70.0 m/minute or less. When the take-up speed at break of the expanded particles is within the range above, foam molded articles are likely to have high flexibility. The take-up speed at break of the expanded particles is preferably 35.0 m/minute or more, and more preferably 46.0 m/minute or more.

In one or more embodiments of the present invention, the take-up speed at break of the polypropylene resin expanded particles at 200°C can be measured using a sample obtained by forming the expanded particles or foam molded article into a resin lump. Because the resin physical properties of the expanded particles and the foam molded article are the same, either can be used for the measurement

Formation of Sample

The expanded particles were placed in a dryer, the temperature of which was adjusted to Tm2 + 10°C based on the melting point Tm2 of the expanded particles. The pressure inside the dryer was reduced to -0.05 MPa (gauge pressure) to -0.10 MPa (gauge pressure) over 5 to 10 minutes using a vacuum pump, and the expanded particles were left in the dryer for 30 minutes while air inside the expanded particles was removed. Thus, a resin lump was obtained. If the resin particles stick together to form a large resin lump, the resin lump may be finely cut with scissors or the like or pulverized with a mixer or the like.

In the case of the foam molded article, the molded article was finely cut with scissors, a slicer, or the like, and then pulverized with a mixer or the like. The fragments of the pulverized foam molded article are placed in a dryer, the temperature of which is adjusted to Tm2 + 10°C based on the melting point Tm2 of the expanded particles. The pressure inside the dryer is reduced to -0.05 MPa (gauge pressure) to -0.10 MPa (gauge pressure) over 5 to 10 minutes using a vacuum pump, and the fragments are left in the dryer for 30 minutes while air inside the foam molded article is removed. Thus, a resin lump was obtained. If the fragments stick together to form a large resin lump, the resin lump may be finely cut with scissors or the like or pulverized with a mixer or the like.

In the polypropylene resin expanded particles in one or more embodiments of the present invention, the base resin contains a polypropylene resin. It is preferable that the polypropylene resin is contained as a main component. In one or more embodiments of the present invention, "a polypropylene resin is contained as a main component" means that the base resin contains the polypropylene resin in an amount of 90 mass% or more, preferably 95 mass% or more, more preferably 97 mass% or more, even preferably 99 mass% or more, and particularly preferably 100 mass%. Since the base resin contains a polypropylene resin as a main component, the DSC curve obtained in the first heating of the expanded particles is likely to have only one melting peak in the temperature range from 130°C to 170°C, and a melting heat amount in the temperature range from 130°C to 170°C is likely to be 90.0% or more of the total melting heat amount.

In the base resin in one or more embodiments of the present invention, the polypropylene resin contains a propylene homopolymer having a branched structure (also referred to as a "branched polypropylene" hereinafter) in an amount of 40 mass% or more and 85 mass% or less and an $\alpha$-olefin-propylene random copolymer having a melting point of 135°C or higher and 155°C or lower in an amount of 15 mass% or more and 60 mass% or less, preferably a branched polypropylene in an amount of 50 mass% or more and 80 mass% or less and an $\alpha$-olefin-propylene random copolymer in an amount of 20 mass% or more and 50 mass% or less, more preferably a branched polypropylene in an amount of 60 mass% or more and 80 mass% or less and an $\alpha$-olefin-propylene random copolymer in an amount of 20 mass% or more and 40 mass% or less, and even more preferably a branched polypropylene in an amount of 65 mass% or more and 80 mass% or less and an $\alpha$-olefin-propylene random copolymer in an amount of 20 mass% or more and 35 mass% or less. This makes the expanded particles easily satisfy the above-described melting point Tm2, a take-up speed at break, and an open cell ratio.

Examples of the above-mentioned branched polypropylene include, but are not particularly limited to, modified polypropylene resins obtained by subjecting a propylene homopolymer to at least one of a radiation treatment or a reaction with a radical polymerization initiator. Each case may be accompanied by or followed by a reaction with an unsaturated functional compound. In terms of easy production and economic advantage, it is preferable to use modified polypropylene resins obtained by, for example, reacting a propylene homopolymer with a radical polymerization initiator to introduce a branched structure.

Typical examples of the radical polymerization initiator include peroxides and azo compounds. Preferable initiators are those having an ability to abstract hydrogen from a propylene homopolymer or an unsaturated functional compound such as a conjugated diene compound, which will be described later. Typical examples of the initiators having an ability to abstract hydrogen include organic peroxides such as ketone peroxides, peroxyketals, hydroperoxides, dialkylperoxides, diacylperoxides, peroxydicarbonates, and peroxyesters. Among these, initiators having a particularly high hydrogen abstraction ability are preferable, and examples thereof include: peroxyketals such as 1,1-bis(t-butylperoxy)3,3,5-trimethylcyclohexane, 1,1-bis(t-butylperoxy)cyclohexane, n-butyl 4,4-bis(t-butylperoxy)valerate, and 2,2-bis(t-butylperoxy)butane; dialkylperoxides such as dicumyl peroxide, 2,5-dimethyl-2,5-di(t-butylperoxy)hexane, $\alpha,\alpha'$-bis(t-butylperoxy-m-isopropyl)benzene, t-butylcumyl peroxide, di-t-butyl peroxide, and 2,5-dimethyl-2,5-di(t-butylperoxy)-3-hexyne; diacylperoxides such as benzoyl peroxide; peroxydicarbonates such as di-normalpropyl peroxydicarbonate, diisopropyl peroxydicarbonate, di(4-t-butylcydohexyl) peroxydicarbonate, di(2-ethylhexyl) peroxydicarbonate, di-sec-butyl peroxydicarbonate, and dicetyl peroxydicarbonate; and peroxyesters such as t-butyl peroxyoctoate, t-butyl peroxyisobutyrate, t-butyl peroxylaurate, t-butyl peroxy-3,5,5-trimethylhexanoate, t-butyl peroxyisopropylcarbonate, 2,5-dimethyl-2,5-di(benzoylperoxy)hexane, t-butyl peroxyacetate, t-butyl peroxybenzoate, and di-t-butyl peroxyisophthalate. These substances may be used alone or in combination of two or more.

The addition amount of the radical polymerization initiator is preferably 0.01 parts by mass or more and 10 parts by mass or less, and more preferably 0.05 parts by mass or more and 4 parts by mass or less, with respect to 100 parts by mass of the propylene homopolymer. Adding the radical polymerization initiator in an amount within the range above makes it possible to modify the resin efficiently.

Examples of the unsaturated functional compound include unsaturated bifunctional compounds and unsaturated polyfunctional compounds having two or more functional groups. Unsaturated bifunctional compounds that can be polymerized via free radicals are preferable. Examples of the unsaturated bifunctional compounds include divinyl compounds, allyl compounds, conjugated diene compounds, aromatic and aliphatic bis(maleimides), and aromatic and aliphatic bis(citraconimides). Examples of the divinyl compounds include divinylaniline, m-divinylbenzene, p-divinylbenzene, divinylpentane, and divinylpropane. Examples of the allyl compounds include allyl acrylate, allyl methacrylate, allyl methyl maleate, and allyl vinyl ether. Examples of the conjugated diene compounds include butadiene, isoprene, 1,3-heptadiene, 2,3-dimethylbutadiene, and 2,5-dimethyl-2,4-hexadiene. These substances may be used alone or in combination of two or more. Among these, conjugated diene compounds are preferable, and butadiene and/or isoprene is particularly preferable because they are inexpensive and easy to handle, and the reaction is likely to proceed uniformly.

The conjugated diene compounds may be used together with a copolymerizable monomers such as vinyl chloride, vinylidene chloride, acrylonitrile, methacrylonitrile, acrylamide, methacrylamide, vinyl acetate, acrylic acid, methacrylic acid, maleic acid, maleic anhydride, metal salts of acrylic acid, metal salts of methacrylic acid, acrylates, and methacrylates. Examples of the acrylates include methyl acrylate, ethyl acrylate, butyl acrylate, 2-ethylhexyl acrylate, and stearyl acrylate. Examples of the methacrylates include ethyl methacrylate, butyl methacrylate, 2-ethylhexyl methacrylate, and stearyl methacrylate.

The addition amount of the conjugated diene compound is preferably 0.01 parts by mass or more and 20 parts by mass or less, more preferably 0.05 parts by mass or more and 5 parts by mass or less, and even more preferably 0.2 parts by mass or more and 2.5 parts by mass or less, with respect to 100 parts by mass of the propylene homopolymer. When the addition amount of the conjugated diene compound is within the range above, modification effects can be exhibited, and the cost can be reduced.

Examples of an apparatus for reacting the propylene homopolymer, the unsaturated functional compound (e.g., conjugated diene compound), and the radical polymerization initiator include: kneaders such as rolls, co-kneaders, Banbury mixers, Brabenders, single-screw extruders, and twin-screw extruders; horizontal agitators such as twin-screw surface renewal apparatuses and twin-screw multi-disk apparatuses; and vertical agitators such as double helical ribbon agitators. Out of these apparatuses, it is preferable to use the kneader. In particular, an extruder such as a single-screw extruder or twin-screw extruder is preferable from the viewpoint of productivity.

The order and the method for mixing and kneading (agitating) the propylene homopolymer, the unsaturated functional compound (e.g., conjugated diene compound), and the radical polymerization initiator are not particularly limited. The propylene homopolymer, the unsaturated functional compound (e.g., conjugated diene compound), and the radical polymerization initiator may be mixed together and then melt-kneaded (agitated). Alternatively, the unsaturated functional compound (e.g., conjugated diene compound) and the radical initiator may be simultaneously or separately mixed with the propylene homopolymer that has been melt-kneaded (agitated), either all at once or in portions. The temperature of the kneader (agitator) is preferably 130°C or higher and 300°C or lower because the propylene homopolymer melts in this temperature range but does not thermally decompose. In general, the melt-kneading is preferably performed for 1 minute or longer and 60 minutes or shorter.

The melt tension of the branched polypropylene is preferably 10 cN or more and 50 cN or less, more preferably 11 cN or more and 40 cN or less, even more preferably 12 cN or more and 30 cN or less, and particularly preferably 13 cN or more and 20 cN or less. This makes the expanded particles easily satisfy the above-described melting point Tm2, a take-up speed at break, and an open cell ratio, and improves the moldability and flexibility of the molded article.

The MFR of the branched polypropylene is preferably 0.5 g/10 minutes or more and 5 g/10 minutes or less, more preferably 1.0 g/10 minutes or more and 4 g/10 minutes or less, and even more preferably 1.5 g/10 minutes or more and 3 g/10 minutes or less. When the MFR of the branched polypropylene is within the range above, the surface properties of the foam molded articles are improved, and the productivity is also enhanced.

The melting point of the branched polypropylene is preferably 150°C or higher, and more preferably 155°C or higher. This improves the heat resistance of the expanded particles and the foam molded articles easily. At the same time, the melting point of the branched polypropylene is preferably 165°C or lower, and more preferably 163°C or lower, from the viewpoint of, for example, the steam pressure during the in-mold foam molding, but is not particularly limited thereto.

The branched polypropylene may be a commercially available product such as Deploy (trademark) WB140HMS manufactured by BorealisAG.

Examples of an $\alpha$-olefin that can copolymerize with propylene to form an $\alpha$-olefin-propylene random copolymer include $\alpha$-olefins having 2 or 4 to 12 carbon atoms such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene. In particular, ethylene and 1-butene are preferable from the viewpoint of improvement in cold brittleness resistance, low cost, and the like. These substances may be used alone or in combination of two or more.

The $\alpha$-olefin-propylene random oopolymer preferably includes an $\alpha$-olefin in an amount of 1 mass% or more and 25 mass% or less and propylene in an amount of 75 mass% or more and 99 mass% or less, more preferably an $\alpha$-olefin in an amount of 1.5 mass% or more and 15 mass% or less and propylene in an amount of 85 mass% or more and 98.5 mass% or less, and even more preferably an $\alpha$-olefin in an amount of 1.5 mass% or more and 6 mass% or less and propylene in an amount of 94 mass% or more and 98.5 mass% or less. This is preferable because the foam molded article becomes flexible and retains the characteristics of a polypropylene resin such as crystallizability, rigidity, and chemical resistance.

The melting point of the $\alpha$-olefin-propylene random copolymer is 135°C or higher and 155°C or lower, preferably 137°C or higher and 152°C or lower, and more preferably 138°C or higher and 150°C or lower. When the melting point is lower than or equal to 155°C, the foam molded articles have improved flexibility. When the melting point is higher than or equal to 135°C, the foam molded articles have improved moldability.

The MFR of the $\alpha$-olefin-propylene random copolymer is preferably 5 g/10 minutes or more and 50 g/10 minutes or less, more preferably 6 g/10 minutes or more and 45 g/10 minutes or less, even more preferably 7 g/10 minutes or more and 42 g/10 minutes or less, and even more preferably 15 g/10 minutes or more and 42 g/10 minutes or less. This makes it likely that the expanded particles have a low open cell ratio, and improves the moldability and flexibility of the molded article.

In one or more embodiments of the present invention, the base resin may contain a resin other than the polypropylene resin in an amount of 10 mass% or less, 5 mass% or less, 3 mass% or less, or 1 mass% or less, in addition to the polypropylene resin, to an extent that the effect of the present invention is not impaired. More specifically, in one or more embodiments of the present invention, the base resin may contain the polypropylene resin in an amount of 90 mass% or more and 100 mass% or less and another resin in an amount of 0 mass% or more and 10 mass% or less, the polypropylene resin in an amount of 95 mass% or more and 100 mass% or less and another resin in an amount of 0 mass% or more and 5 mass% or less, the polypropylene resin in an amount of 97 mass% or more and 100 mass% or less and another resin in an amount of 0 mass% or more and 3 mass% or less, or the polypropylene resin in an amount of 99 mass% or more and 100 mass% or less and another resin in an amount of 0 mass% or more and 1 mass% or less. Examples of the other resin include: polyethylene resins such as high-density polyethylene, medium-density polyethylene, low-density polyethylene, linear low-density polyethylene, linear very-low-density polyethylene, ethylene-vinyl acetate copolymers, ethylene-acrylic acid copolymers, and ethylene-methacrylic acid copolymers; styrene resins such as polystyrene, and styrene-maleic anhydride copolymers; and polyamides.

In one or more embodiments of the present invention, the expanded particles may contain an additive as necessary in addition to the base resin, and examples thereof include: nucleating agents (also referred to as "bubble nucleating agents"); colorants; antistatic agents; flame retardants; stabilizers such as antioxidants, metal deactivators, phosphorus processing stabilizers, ultraviolet absorbers, ultraviolet stabilizers, fluorescent brightening agents, metallic soaps, and antacid adsorbents; cross-linking agents; chain transfer agents; lubricants; plasticizers; fillers; and reinforcing materials. A masterbatch resin containing such an additive at a high concentration may be produced in advance by adding the additive to a resin, and be added to a polypropylene-resin mixture. The resin used in such a masterbatch resin is preferably a polyolefin resin, and more preferably a polypropylene resin. It is even more preferable to produce a masterbatch resin using the same polypropylene resin as the polypropylene resin used in the base resin for expanded particles.

In one or more embodiments of the present invention, the polypropylene resin expanded particles can be produced using, for example, what is known as an "extrusion expansion technique" as follows. That is, a base resin containing a polypropylene resin (preferably as a main component) is melt-kneaded together with a nucleating agent and a blowing agent and is then extruded, and the extruded melt-kneaded product is cut In the producing method in one or more embodiments of the present invention, it is preferable that the polypropylene resin contains a propylene homopolymer having a branched structure in an amount of 40 mass% or more and 85 mass% or less and an $\alpha$-olefin-propylene random copolymer in an amount of 15 mass% or more and 60 mass% or less, the propylene homopolymer having a branched structure has a melt tension of 10 cN or more and 50 cN or less, and the $\alpha$-olefin-propylene random copolymer has a melting point of 135°C or higher and 155°C or lower and a melt flow rate of 5 g/10 minutes or more and 50 g/10 minutes or less. This makes it likely that expanded particles having Tm1, Tm2, a take-up speed at break, and an open cell ratio within the ranges above are obtained, and foam molded articles having favorable moldability and flexibility can be formed using such expanded particles.

Examples of the nucleating agent include sodium hydrogen carbonate, a mixture of sodium hydrogen carbonate and citric acid, monosodium citrate, talc, and calcium carbonate. These nucleating agents may be used alone or in combination of two or more. The nucleating agent preferably includes one or more selected from the group consisting of talc, sodium hydrogen carbonate, and calcium carbonate, and more preferably includes talc, from the viewpoint that expanded particles having Tm1, Tm2, a take-up speed at break, and an open cell ratio within the ranges above are likely to be obtained. In general, the addition amount of the nucleating agent is preferably 0.01 parts by mass or more and 5 parts by mass or less with respect to 100 parts by mass of the base resin, but is not particularly limited thereto.

Examples of the blowing agent include: aliphatic hydrocarbons such as propane, normal butane, isobutane, normal pentane, isopentane, and hexane; alicyclic hydrocarbons such as cyclopentane and cyclobutane; inorganic gases such as air, nitrogen, and carbon dioxide; and water. These blowing agents may be used alone or in combination of two or more. In particular, an inorganic gas and/or water is preferable from the viewpoint of safety in handling and simplification of the required equipment specifications, and an inorganic gas, especially carbon dioxide, is preferable from the viewpoint that foam articles having a high expansion ratio is likely to be obtained. The addition amount of the blowing agent is adjusted as appropriate depending on the kind of the blowing agent and the target expansion ratio of the polypropylene resin expanded particles. For example, the addition amount of the blowing agent is preferably 1 part by mass or more and 20 parts by mass or less, and more preferably 2 parts by mass or more and 15 parts by mass or less, with respect to 100 parts by mass of the base resin.

In the producing method in one or more embodiments of the present invention, the melt-kneading can include two stages. The temperature at the second stage may be the same as the temperature at the first stage, but it is preferable that the temperature at the second stage is lower than the temperature at the first stage. Specifically, the polypropylene resin expanded particles can be produced as follows. That is, after the base resin, a nucleating agent, a blowing agent, and optionally another additive have been fed into a first-stage extruder and melt-kneaded, the melt-kneaded product is fed into a second-stage extruder in which the temperature is set to be lower than that in the first-stage extruder, and is cooled, the melt-kneaded product (the melt-kneaded product containing the blowing agent) is then extruded through a die attached to the leading end of the second-stage extruder, and the extruded melt-kneaded product is cut The open cell ratio of the expanded particles is likely to be reduced due to the temperature in the second-stage extruder being lower than the temperature in the first-stage extruder, and thus the moldability is improved. The second-stage extruder is mainly used to cool the melt-kneaded product, and therefore, an apparatus other than an extruder may also be used as long as this purpose can be achieved. For example, a static mixer, a melt cooler, or the like can be used instead.

In one or more embodiments of the present invention, the difference between the temperature at the first stage and the temperature at the second stage is preferably 5°C or more, more preferably 8°C or more, and even more preferably 10°C or more, from the viewpoint of reducing the open cell ratio of the expanded particles and improving the moldability. The difference between the temperature at the first stage and the temperature at the second stage is preferably, but not particularly limited to, 50°C or less, and more preferably 40°C or less, from the viewpoint of, for example, easily decreasing the temperature at the second stage to a target temperature.

In one or more embodiments of the present invention, the temperature at the first stage, which is not particularly limited, may be determined as appropriate depending on the melting point of the base resin to be used, the kind and/or addition amount of the blowing agent, the kind and/or melting point of the additive, the allowable torque of the extruder, and the like, from the viewpoint of thoroughly melt-kneading the base resin, the nucleating agent, and the blowing agent (and optionally another additive). For example, the temperature at the first stage is preferably (Tm2 + 20°C) or higher and (Tm2 +70°C) or lower, more preferably (Tm2 + 20°C) or higher and (Tm2 + 60°C) or lower, and even more preferably (Tm2 + 20°C) or higher and (Tm2 + 50°C) or lower.

In one or more embodiments of the present invention, the temperature at the second stage, which is not particularly limited, may be determined as appropriate depending on the melting point of the base resin to be used, the kind and/or addition amount of the blowing agent, the kind and/or melting point of the additive, the allowable torque of the extruder, and the like. For example, the temperature at the second stage is preferably (Tm2 + 40°C) or lower, more preferably (Tm2 + 30°C) or lower, and even more preferably (Tm2 + 20°C) or lower, from the viewpoint of reducing the open cell ratio of the expanded particles and improving the moldability. The temperature in the second-stage extruder is preferably (Tm2 - 5°C) or higher, and more preferably Tm2 or higher, from the viewpoint of improving the productivity of the extrusion expansion and the operation stability, for example.

Chopping techniques used to obtain expanded particles in an extrusion expansion technique are roughly classified into cold cutting techniques and die face cutting techniques. An example of the cold cutting techniques is a technique (strand cutting technique) in which a molten resin containing a blowing agent that has been extruded through a porous die is expanded, and a strand-shaped expanded article is drawn while being cooled by, for example, being passed through a water tank and is then chopped. The die face cutting techniques are techniques in which a molten resin that has been extruded through a porous die is cut using a cutter that is rotated in contact with the die surface or with a slight gap being kept between the cutter and the die surface. The die face cutting techniques are classified into an under-water cutting technique, a watering cutting technique, and a hot cutting technique according to cooling techniques.

The extrusion discharge amount from the above-mentioned second-stage extruder, a static mixer or melt cooler, is not particularly limited, and may be, for example, 1 kg/hour or more and 1000 kg/hour or less. The extrusion discharge amount may be about 1 kg/hour or more and 50 kg/hour or less for a lab-type extruder, and the extrusion discharge amount is preferably 20 kg/hour or more and 1000 kg/hour or less for a practical use-type extruder.

Although there is no limitation on the shape of a die used in the above-mentioned second-stage extruder, a static mixer or melt cooler, the opening of the die preferably has a circular shape from the viewpoint of easily obtaining expanded particles having the uniform external appearance and the uniform shape, and the diameter of the opening is preferably 0.1 mm or more and 2.0 mm or less and more preferably 0.3 mm or more and 1.0 mm or less.

In one or more embodiments of the present invention, the mass per expanded particle is preferably 0.2 mg or more and 10 mg or less, and more preferably 0.5 mg or more and 6.0 mg or less. In an embodiment of the present invention, the mass per expanded particle is the average mass of resin particles calculated based on the mass of randomly selected 100 particles out of the polypropylene resin expanded particles. When the mass per polypropylene resin expanded particle is 0.2 mg or more, the dimension change rate of a foam molded article tends not to be high, and when the mass per polypropylene resin expanded particle is 10 mg or less, the polypropylene resin expanded particles tend to be easily filled into a mold.

In one or more embodiments of the present invention, the expansion ratio of the expanded particles is not particularly limited and may be adjusted as necessary. However, since highly flexible molded article can be obtained despite a low expansion ratio, the expansion ratio of the expanded particles may be, for example, 3 times or more and 15 times or less, or 4 times or more and 10 times or less the expansion ratio of the particles before being expanded, in one embodiment of the present invention.

In one or more embodiments of the present invention, the expansion ratio of the polypropylene resin expanded particles may be determined in the following manner. A mass w (g) of the polypropylene resin expanded particles is measured, and then the polypropylene resin expanded particles are immersed in ethanol contained in a graduated cylinder. A volume v ($cm^3$) of the polypropylene resin expanded particles is measured based on an increase in the ethanol level in the graduated cylinder (immersion method), and a true specific gravity of the polypropylene resin expanded particles is calculated according to the equation, pb = w/v. The expansion ratio is calculated as a ratio (ρr/ρb) of the density pr of the polypropylene resin before being expanded to the true specific gravity pb of the polypropylene resin expanded particles.

In one or more embodiments of the present invention, the bulk density of the polypropylene resin expanded particles is not particularly limited, but is preferably, for example, 60 g/L or more and 300 g/L or less, and more preferably 80 g/L or more and 300 g/L or less. When the bulk density of the expanded particles is within the range above, foam molded articles having high density and favorable flexibility can be obtained. In one or more embodiments of the present invention, the bulk density of the polypropylene resin expanded particles can be measured using the method described in examples.

In one or more embodiments of the present invention, the average cell diameter (also referred to as the "average bubble diameter") of the polypropylene resin expanded particles is preferably, for example, 100 μm or more and 500 μm or less, and more preferably 120 μm or more and 400 μm or less, but is not particularly limited thereto. When polypropylene resin expanded particles have an average bubble diameter of 100 μm or more, the shrinkage of resultant foam molded articles is likely to be suppressed. When they have an average bubble diameter of 500 μm or less, the molding cycle of the in-mold foam molding can be easily shortened. In one or more embodiments of the present invention, the average cell diameter of the polypropylene resin expanded particles can be measured using the method described in examples.

In one or more embodiments of the present invention, the polypropylene resin expanded particles are molded into a foam molded article through in-mold foam molding. The foam molded article has favorable moldability and flexibility. Specifically, the foam molded article has favorable elongation at break.

In one or more embodiments of the present invention, the polypropylene resin foam molded article can be formed by filling the polypropylene resin expanded particles into a mold that can be closed but not hermetically sealed and heating it with steam or the like.

For example, the following methods can be used to mold the polypropylene resin expanded particles into a polypropylene resin foam molded article: (a) a method in which a predetermined internal pressure is applied to expanded particles by pressurizing the expanded particles with an inorganic gas and thus impregnating the particles with the inorganic gas, and then the expanded particles are filled into a mold and thermally fused using steam or the like (e.g., JP S51-22951B); (b) a method in which expanded particles are compressed with gas pressure, are filled into a mold, and then are thermally fused using steam or the like while utilizing the resilience of the particles (e.g., JP S53-33996B); and (c) a method in which expanded particles are filled into a mold with a gap in the mold being expanded, and then the expanded particles filled thereinto are compressed by closing the mold until the gap has a predetermined size and thermally fused using steam or the like.

In one or more embodiments of the present invention, it is sufficient that the density of the polypropylene resin foam molded article is determined as appropriate in accordance with the application. Although the density thereof is not particularly limited, it is preferably 60 g/L or more and 300 g/L or less, more preferably 90 g/L or more and 300 g/L or less, and even more preferably 100 g/L or more and 300 g/L or less. When the density of the foam molded article is within the range above, a favorable molded article is likely to be obtained, and the molded article is less likely to shrink or deform by heat and suitable for repeated use. In one or more embodiments of the present invention, the density of the polypropylene resin foam molded article can be measured using a method described in examples.

In one or more embodiments of the present invention, when measured in accordance with ISO1798, the elongation at break of the foam molded article having a density of 60 g/L or more (preferably 90 g/L or more) is preferably 10.0% or more, more preferably 10.5% or more, and even more preferably 11.0% or more, from the viewpoint of achieving excellent flexibility. Although the elongation at break is not particularly limited, it may be 100% or less, for example, from the practical viewpoint.

In one or more embodiments of the present invention, it is preferable that the compressive strength St (kPa) at 50% strain and density D (g/L) of the foam molded article satisfy Mathematical Relationship (1) below, from the viewpoint of achieving both favorable energy absorption performance and favorable flexibility. It is more preferable that the compressive strength St (kPa) at 50% strain and density D (g/L) of the foam molded article satisfy Mathematical Relationship (1) below, and the elongation at break measured in accordance with ISO1798 is 10% or more. Such a polypropylene resin foam molded article can be favorably used as a cushioning material

Mathematical Relationship (1)

$$St \geq 0.0000525 \times D^3 + 0.0581 \times D^2 - 0.0283 \times D + 157.42$$

In Mathematical Relationship (1) above, St means a numerical value of the compressive strength expressed in the unit of kPa, and D means a numerical value of density expressed in the unit of g/L.

One or more embodiments of the present invention may be configured as follows.

[1] Polypropylene resin expanded particles containing a base resin that contains a polypropylene resin,

wherein the polypropylene resin contains a propylene homopolymer having a branched structure in an amount of 40 mass% or more and 85 mass% or less, and an α-olefin-propylene random copolymer having a melting point of 135°C or higher and 155°C or lower in an amount of 15 mass% or more and 60 mass% or less,
the polypropylene resin expanded particles have a single melting peak in a temperature range from 130°C to 170°C, and a melting heat amount in the temperature range from 130°C to 170°C is 90.0% or more of a total melting heat amount in first heating in differential scanning calorimetry,
the polypropylene resin expanded particles have a melting point Tm2 of 155.0°C or higher and 160.0°C or lower, the melting point Tm2 being a melting peak value in second heating in differential scanning calorimetry,

the polypropylene resin expanded particles have a take-up speed at break of 30.0 m/minute or more and 70.0 m/minute or less at a temperature of 200°C, and

the polypropylene resin expanded particles have an open cell ratio of 30% or less.

[2] The polypropylene resin expanded particles according to [1], wherein the polypropylene resin expanded particles are extrusion-expanded particles.

[3] The polypropylene resin expanded particles according to [1] or [2], wherein the polypropylene resin expanded particles have a bulk density of 60 g/L or more and 300 g/L or less.

[4] The polypropylene resin expanded particles according to any one of [1] to [3], wherein the polypropylene resin expanded particles have an average cell diameter of 100 μm or more and 500 μm or less.

[5] The polypropylene resin expanded particles according to any one of [1] to [4], wherein the propylene homopolymer having a branched structure has a melt tension of 10 cN or more and 50 cN or less.

[6] The polypropylene resin expanded particles according to any one of [1] to [5], wherein the propylene homopolymer having a branched structure has a melt flow rate of 0.5 g/10 minutes or more and 5 g/10 minutes or less.

[7] The polypropylene resin expanded particles according to any one of [1] to [6], wherein the propylene homopolymer having a branched structure has a melting point of 150°C or higher and 165°C or lower.

[8] The polypropylene resin expanded particles according to any one of [1] to [7], wherein the α-olefin-propylene random oopolymer has a melt flow rate of 5 g/10 minutes or more and 50 g/10 minutes or less.

[9] A method for producing polypropylene resin expanded particles, including:

melt-kneading a base resin containing a polypropylene resin together with a nucleating agent and a blowing agent; extruding a melt-kneaded product; and cutting the extruded melt-kneaded product to obtain polypropylene resin expanded particles,

wherein the polypropylene resin contains a propylene homopolymer having a branched structure in an amount of 40 mass% or more and 85 mass% or less, and an α-olefin-propylene random copolymer in an amount of 15 mass% or more and 60 mass% or less,

the propylene homopolymer having a branched structure has a melt tension of 10 cN or more and 50 cN or less, and

the α-olefin-propylene random copolymer has a melting point of 135°C or higher and 155°C or lower and a melt flow rate of 5 g/10 minutes or more and 50 g/10 minutes or less.

[10] The method for producing polypropylene resin expanded particles according to [9], wherein the nucleating agent includes at least one selected from the group consisting of talc, sodium hydrogen carbonate, a mixture of sodium hydrogen carbonate and citric acid, monosodium citrate, and calcium carbonate.

[11] The method for producing polypropylene resin expanded particles according to [9] or [10], wherein the blowing agent includes at least one selected from the group consisting of propane, butane, pentane, hexane, air, nitrogen, carbon dioxide, and water.

[12] A polypropylene resin foam molded article comprised of the polypropylene resin expanded particles according to any one of [1] to [8],

wherein the polypropylene resin expanded particles have an open cell ratio of 30% or less, and

the polypropylene resin foam molded article has a density D (g/L) of 60 g/L or more and 300 g/L or less, a compressive strength St (kPa) at 50% strain and the density D (g/L satisfy Mathematical Relationship (1) below, and the polypropylene resin foam molded article has a elongation at break of 10% or more.

### Mathematical Relationship (1)

$$St \geq 0.0000525 \times D^3 + 0.0581 \times D^2 - 0.0283 \times D + 157.42$$

[13] A polypropylene resin foam molded article comprised of polypropylene resin expanded particles,

wherein the polypropylene resin expanded particles are extrusion-expanded particles containing a base resin that contains a propylene homopolymer having a branched structure in an amount of 40 mass% or more and 85 mass% or less, and has an open cell ratio of 30% or less, and

the polypropylene resin foam molded article has a density D (g/L) of 60 g/L or more and 300 g/L or less, a compressive strength St (kPa) at 50% strain and the density D (g/L) satisfy Mathematical Relationship (1) below, and the polypropylene resin foam molded article has a elongation at break of 10% or more.

Mathematical Relationship (1)

$$St \geq 0.0000525 \times D^3 + 0.0581 \times D^2 - 0.0283 \times D + 157.42$$

Examples

Hereinafter, one or more embodiments of the present invention will be described in detail based on examples. Note that the present invention is not limited to these examples.

The following are descriptions of evaluation methods and measurement methods performed in examples and comparative examples.

Measurement of Melting Point of Polypropylene Resin

A differential scanning calorimeter (DSC) (DSC6200 manufactured by Seiko Instruments Inc.) was used to measure the melting point of the polypropylene resin. Specifically. 5 to 6 mg of a sample was heated from 40°C to 220°C at a heating rate of 10°C/minute and was thus melted, the melt was cooled from 220°C to 40°C at a cooling rate of 10°C/minute and was thus crystallized, and the crystallized product was heated from 40°C to 220°C at a heating rate of 10°C/minute again. A melting peak temperature on a DSC curve obtained in the second heating was defined as the melting point Tm2.

Differential Scanning Calorimetry of Polypropylene Resin Expanded Particles

A differential scanning calorimeter (DSC) (DSC6200 manufactured by Seiko Instruments Inc.) was used to heat 5 to 6 mg of the obtained polypropylene resin expanded particles from 40°C to 300°C at a heating rate of 10°C/minute to melt them, cool the melt from 300°C to 40°C at a cooling rate of 10°C/minute to crystallize it, and heating the crystallized product from 40°C to 300°C at a heating rate of 10°C/minute again. Thus, DSC curves in the first heating and the second heating were obtained.

Heat Amount Ratio

A line segment AB connecting a point (point A) corresponding to 100°C and a melting end point (point B) on the DSC curve in the first heating was drawn. A melting heat amount of an area enclosed by the line segmentAB and the DSC curve was calculated as a total melting heat amount Q1. A straight line was drawn in parallel to the Y axis from a point (point C) on the line segmentAB corresponding to 130°C onto the DSC curve, and an intersection of the straight line and the DSC curve was defined as a point D. Similarly, a straight line was drawn in parallel to the Y axis from a point (point E) corresponding to 170°C on the line segment AB onto the DSC curve, and an intersection of the straight line and the DSC curve was defined as a point F. A melting heat amount of an area enclosed by a line segment CD, a line segment CE, a line segment EF, and the DSC curve was calculated as a melting heat amount Q2 in the temperature range from 130°C to 170°C. If the melting end temperature was less than 170°C, a melting heat amount of an area enclosed by the line segment CD, a line segment CB, and the DSC curve was calculated as a melting heat amount Q2. The melting heat amount ratio was calculated using Q1 and Q2 in accordance with the following equation.

Melting heat amount ratio (%) = Q2 × 100 / Q1

Melting Point

The obtained melting peak temperature in the second heating was defined as the melting point Tm2 of the polypropylene resin expanded particles.

Melt Flow Rate (MFR)

The melt flow rate was measured in conformity with the prescriptions of Method B of JIS K 7210 under the condition that the orifice diameter was 2.0959 ± 0.005 mm, the orifice length was 8.000 ± 0.025 mm, the temperature was 230°C, and the load was 2.16 kg.

Specifically, an amount of resin extruded from a die in a certain period of time under a load of 2.16 kg at 230°C was measured in conformity with the prescriptions of Method B of JIS K 7210 using Melt Indexer S-01 (manufactured by Toyo Seiki Seisaku-sho, Ltd.) and was converted into an amount of resin extruded in 10 minutes. The converted amount was defined as the melt flow rate. Note that the above-mentioned certain period of time was as follows: 120 seconds when the melt flow rate was greater than 0.5 g/10 minutes and smaller than or equal to 1.0 g/10 minutes; 60 seconds when the melt flow rate was greater than 1.0 g/10 minutes and smaller than or equal to 3.5 g/10 minutes; 30 seconds when the melt flow rate was greater than 3.5 g/10 minutes and smaller than or equal to 10 g/10 minutes; 10 seconds when the melt flow rate was greater than 10 g/10 minutes and smaller than or equal to 25 g/10 minutes; 5 seconds when the melt flow rate was greater than 25 g/10 minutes and smaller than or equal to 100 g/10 minutes; and 3 seconds when the melt flow rate was greater than 100 g/10 minutes.

Melt Tension

Capirograph (manufactured by Toyo Seiki Seisaku-sho, Ltd.) equipped with an attachment for melt tension measurement and a cylinder (diameter: 10 mm) with an orifice (diameter: 1 mm, length: 10 mm) at its end was used. A strand discharged from a die along with the downward movement of a piston at a speed of 10 mm/minute at 200°C was hung on a pulley with a load cell located 350 mm below and taken up at a speed of 1 m/minute. After stabilization, the take-up speed was increased at a rate to reach 200 m/minute in 4 minutes. A load (unit: cN) applied to the pulley with a load cell when the strand was fractured was defined as a melt tension. If the strand did not fracture, the melt tension was judged unmeasurable.

Take-up Speed at Break

In the melt tension measurement above, the take-up speed was increased until the strand was fractured The take-up speed at which the strand fractured was defined as the take-up speed at break. If the strand did not fracture, the take-up speed at break was judged unmeasurable. The take-up speed at break can be used as an index of ductility of a molten resin during expansion.

Preparation of Samples for Measurement of Melt Tension and Take-up Speed at Break of Polypropylene Resin Expanded Particles

For measurement of the melt tension and take-up speed at break of the polypropylene resin expanded particles, the expanded particles or foam molded article were formed into a resin lump for use as a sample. Because the resin physical properties of the expanded particles and the foam molded article are the same, either can be used for the measurement.

The expanded particles were placed in a dryer, the temperature of which was adjusted to (Tm2 + 10°C) based on the melting point Tm2 of the expanded particles. The pressure inside the dryer was reduced to -0.05 MPa (gauge pressure) to -0.10 MPa (gauge pressure) over 5 to 10 minutes using a vacuum pump, and the expanded particles were left in the dryer for 30 minutes while air inside the expanded particles was removed. Thus, a resin lump was obtained. If the resin particles stick together to form a large resin lump, the resin lump may be finely cut with scissors or the like or pulverized with a mixer or the like.

In the case of the foam molded article, the molded article was finely cut with scissors, a slicer, or the like, and then pulverized with a mixer or the like. The fragments of the pulverized foam molded article were placed in a dryer, the temperature of which was adjusted to (Tm2 + 10°C) based on the melting point Tm2 of the expanded particles. The pressure inside the dryer was reduced to -0.05 MPa (gauge pressure) to -0.10 MPa (gauge pressure) over 5 to 10 minutes using a vacuum pump, and the fragments were left in the dryer for 30 minutes while air inside the foam molded article was removed. Thus, a resin lump was obtained. If the resin particles stick together to form a large resin lump, the resin lump may be finely cut with scissors or the like or pulverized with a mixer or the like.

Open Cell Ratio of Polypropylene Resin Expanded Particles

The volume of the polypropylene resin expanded particles determined in accordance with the method described in PROCEDURE C of ASTM D2856-87 was defined as Vc (cm$^3$), and the open cell ratio (%) was determined in accordance with the following equation.

$$\text{Open cell ratio (\%)} = ((Va - Vc) \times 100) / Va$$

Vc was measured using an air comparison type specific gravimeter Model 1000 manufactured by Tokyo-Science Co., Ltd. The volume Va (cm$^3$) was an apparent volume of the polypropylene resin expanded particles determined by immersing all the polypropylene resin expanded particles in ethanol contained in a graduated cylinder after Vc thereof had been measured using the air comparison type specific gravimeter, and measuring an increase in the liquid level in the graduated cylinder (immersion method).

Bulk Density of Polypropylene Resin Expanded Particles

The polypropylene resin expanded particles were collected in a 1-L measuring cup and leveled off, and then the mass thereof was measured. The bulk density was determined by dividing the mass (g) by a volume of 1 L.

Average Cell Diameter of Polypropylene Resin Expanded Particles

The polypropylene resin expanded particles were each cut through substantially the center thereof with a double-edged razor (double-edged blade of high stainless steel manufactured by FEATHER Safety Razor Co., Ltd.), taking great care not to destroy the expanded membrane (cell membrane). The cut surface was observed and microphotographed with a microscope (VHX-100 manufactured by Keyence Corporation) at a magnification of 100. In the obtained image, a line segment corresponding to a length of 1000 $\mu$m was drawn that passed through a portion of the polypropylene resin expanded particle except for the surface layer, and the number n of bubbles (cells) through which the line segment passed was counted. The cell diameter was calculated from "1000/n" ($\mu$m). The same procedure was performed on 10 polypropylene resin expanded particles, and the calculated cell diameters were averaged to determine the average cell diameter.

Expansion Ratio of Polypropylene Resin Expanded Particles

A mass w (g) of the polypropylene resin expanded particles was measured, and then the polypropylene resin expanded particles were immersed in ethanol contained in a graduated cylinder. A volume v (cm$^3$) of the polypropylene resin expanded particles were measured based on an increase in the ethanol level in the graduated cylinder (immersion method), and a true specific gravity of the polypropylene resin expanded particles was calculated according to the equation, pb = w /v. The expansion ratio was calculated as a ratio ($\rho$r/$\rho$b) of the density $\rho$r of the polypropylene resin before expanded to the true specific gravity pb of the polypropylene resin expanded particles.

Moldability of Polypropylene Resin Foam Molded Article

Molding Method

A polyolefin foam molding machine manufactured by Teubert Maschinenbau GmbH was used. The polypropylene resin expanded particles were filled into a block mold (length: 381 mm; width: 381 mm; and thickness: 60 mm) with a mold gap (hereinafter called "cracking") being set at 18 mm (cracking rate: 30%) and compressed to the mold thickness of 60 mm. Next, air in the mold was discharged by steam at 0.15 MPa (gauge pressure), followed by double-side heat molding for 5 seconds using steam at a predetermined pressure to produce a polypropylene resin foam molded article. At this time, the steam pressure was raised from 0.32 MPa (gauge pressure) in increments of 0.01 MPa to produce the molded article. The steam pressure was raised up to 0.44 MPa (gauge pressure).

Evaluation Method

The obtained foam molded article was left in a drying chamber at 75°C for 24 hours and then left at room temperature for 4 hours. After then the foam molded article was evaluated for the fusion rate and the surface smoothness. The lowest steam pressure at which an acceptable fusion rate and an acceptable surface smoothness were obtained was defined as the minimum molding pressure, and the highest steam pressure at which a molded article can be released only by air was defined as the maximum molding pressure. The difference between the maximum molding pressure and the minimum molding pressure was regarded as a molding process heating range, and the moldability was evaluated according to this range.

A: The moldable range was 0.04 MPa or more, and the moldability was regarded as being good.
B: The moldable range was 0.02 MPa or more and less than 0.04 MPa, and the moldability was regarded as being somewhat good.
C: The moldable range was less than 0.02 MPa, and the moldability was regarded as being poor.

(1) Evaluation of Fusion Rate

The fusion rate of the obtained foam molded article was evaluated by forming a crack in a depth of about 5 mm on the surface of the foam molded article with a knife, splitting the in-mold foam molded article along the crack, observing the fracture surface, and calculating the proportion of the number of destroyed particles to the total number of particles on the fracture surface. The fusion rate that was greater than or equal to 80% was regarded as being acceptable.

(2) Evaluation of Surface Smoothness

The obtained foam molded article was evaluated for whether or not gaps were formed between the expanded particles at the central portion of the surface having the largest area in the foam molded article. If steam pressure is insufficient during the in-mold foam molding, the gaps between the expanded particles cannot be filled sufficiently. The foam molded article in which the number of gaps between the expanded particles was small and whose surface was beautiful was regarded as being acceptable.

Energy Absorption Performance of Polypropylene Resin Foam Molded Article

(1) Density of Polypropylene Resin Foam Molded Article

A mass W (g) of the polypropylene resin foam molded article was measured, and the length, width, and thickness were measured with a vernier caliper to calculate the volume V ($cm^3$). The density of the foam molded article was determined as "W/V". The obtained value was converted into a value expressed in the unit of g/L. The density coefficient was calculated based on Mathematical Formula 2 below.

Mathematical Formula (2)

$$Density\ coefficient = 0.0000525 \times D^3 + 0.0581 \times D^2 - 0.0283 \times D + 157.42$$

In Mathematical Formula 2, D is the density value (g/L) of the polypropylene resin foam molded article.

(2) Compressive Strength of Polypropylene Resin Foam Molded Article

In accordance with ISO844, a compressive strength St (kPa) at 50% strain was measured by compressing a sample cut out from the polypropylene resin foam molded article at a rate of 10% (mm/minute) in the thickness direction (e.g., the sample was compressed at a rate of 5 mm/minute when the thickness was 50 mm).

(3) Energy Absorption Performance

The energy absorption performance was evaluated using the criteria below based on the oompressive strength St at 50% strain and the density coefficient.
Good energy absorption performance: The value of the compressive strength St at 50% strain was greater than or equal to the density coefficient.
Poor energy absorption performance: The value of the oompressive strength St at 50% strain was smaller than the density coefficient.

Elongation at Break of Polypropylene Resin Foam Molded Article

The elongation at break of the polypropylene resin foam molded article was measured based on ISO1798, and the flexibility was evaluated using the criteria below.
Good: The elongation at break was 10% or more, and the polypropylene resin foam molded article was not broken even when the article was deformed due to an impact or the like.
Poor: The elongation at break was less than 10%, and the polypropylene resin foam molded article was broken when the article was deformed just a little due to an impact or the like.

Polypropylene resins listed in Table 1 below were used in the examples and comparative examples.

Table 1

| Code | Substance name | Maker | Product name | Melting point (°C) | MFR (g/10 min) | Melt tension (cN) |
|------|----------------|-------|--------------|--------------------|----------------|-------------------|
| X | Branched polypropylene | Borealis | WB140HMS | 161 | 2 | 14.4 |
| A | | LyondellBasell | RP398T | 142 | 40 | - |
| B | | Japan Polypropylene Corporation | MG03BD | 151 | 30 | - |
| C | Ethylenepropylene random copolymer | Prime Polymer | F227D | 140 | 7 | - |
| D | | Japan Polypropylene Corporation | EG7FTB | 149 | 2 | - |
| E | Ethylene-butene-propylene random copolymer | Prime Polymer | E309M | 148 | 8 | - |
| F | | LyondellBasell | Adsyl7423 XCP | 131 | 6 | - |
| G | Ethylene-propylene block copolymer | Borealis | BC250MO | 165 | 4 | - |

Examples 1 to 7

Production of Polypropylene Resin Expanded Particles

0.2 parts by mass of a nucleating agent (talc) was blended with 100 parts by mass, in total, of raw material resins (polypropylene resins) listed in Table 2 below in a tumbler, and then the resultant blend was fed to an extruder (φ26-mm twin screw extruder) set at the first-stage temperature listed in Table 2. 3.0 parts by mass of carbon dioxide serving as a blowing agent was injected into the extruder, and the blend was melt-kneaded. Next, the melt-kneaded product was passed through a melt cooler set at the second-stage temperature listed in Table 2 and was thus cooled. Then, the melt-kneaded product was extruded under atmospheric pressure at a discharge rate of 10 kg/hour through a die having three holes with a diameter of 0.8 mm, which was attached to the leading end of the melt cooler. A chamber attached to the die tip was filled with water so that water was in contact with the die and the water pressure in the chamber reached to the water pressure (gauge pressure) listed in Table 2. The melt-kneaded product extruded through the die was cut in water at 80°C into particles that each had a mass of 1.5 to 2.0 mg. Thus, polypropylene resin expanded particles were obtained.

Production of Polypropylene Resin Foam Molded Article

A polyolefin foam molding machine manufactured by Teubert Maschinenbau GmbH was used. The polypropylene resin expanded particles were filled into a block mold (length: 381 mm; width: 381 mm; and thickness: 60 mm) with a cracking being set at 18 mm (cracking rate: 30%) and compressed to the mold thickness of 60 mm. Next, the air inside the mold was discharged with steam at 0.15 MPa (gauge pressure), followed by heat molding for 5 seconds with the steam at the minimum molding pressure (gauge pressure) listed in Table 2 to produce a polypropylene resin foam molded article.

Comparative Examples 1 to 14

Polypropylene resin expanded particles and polypropylene resin foam molded articles were produced in the same manner as in Example 1, except that, in "Production of Polypropylene Resin Expanded Particles", the resins shown in Tables 3 and 4 below were used as raw material resins, the second-stage temperature was set as listed in Tables 3 and 4, and the water pressure (gauge pressure) in the chamber was set as listed in Tables 3 and 4, and, in "Production of Polypropylene Resin Foam MoldedArticle", the steam at the minimum molding pressure (gauge pressure) listed in Tables 3 and 4 below was used.

Tables 2 to 4 below show the evaluation results of the polypropylene resin expanded particles and the polypropylene resin foam molded articles obtained in the examples and comparative examples.

FIG. 2 shows a DSC curve obtained in the first heating in differential scanning calorimetry performed on polypropylene resin expanded particles of Example 1. FIG. 2 indicates that the polypropylene resin expanded particles had a single melting peak in the temperature range from 130°C to 170°C in the first heating. Although the DSC curves of the polypropylene resin expanded particles of Examples 2 to 7 are not illustrated, it was also confirmed that a single melting peak was present in the temperature range from 130°C to 170°C in the first heating.

Table 2

| | | | Ex.1 | Ex.2 | Ex.3 | Ex.4 | Ex.5 | Ex.6 | Ex.7 |
|---|---|---|---|---|---|---|---|---|---|
| Blend ratio of raw material resin (parts by mass) | Branched polypropylene | X | 80 | 70 | 50 | 70 | 50 | 70 | 70 |
| | Ethylene-propylene random copolymer | A | 20 | 30 | 50 | | | | |
| | | B | | | | 30 | 50 | | |
| | | C | | | | | | 30 | |
| | Ethylene-butene-propylene random copolymer | E | | | | | | | 30 |
| | Total | | 100 | 100 | 100 | 100 | 100 | 100 | 100 |
| Extrusion expansion conditions | First-stage temperature | [°C] | 210 | 210 | 210 | 210 | 210 | 210 | 210 |
| | $CO_2$ | [parts by mass] | 3 | 3 | 3 | 3 | 3 | 3 | 3 |
| | Second-stage temperature | [°C] | 180 | 180 | 175 | 180 | 175 | 180 | 180 |
| | Water pressure | [MPa] | 0.40 | 0.40 | 0.35 | 0.40 | 0.35 | 0.35 | 0.35 |
| Expanded particle | Bulk density | [g/L] | 90 | 90 | 90 | 90 | 90 | 90 | 90 |
| | Average cell diameter | [μm] | 190 | 230 | 270 | 260 | 300 | 290 | 260 |
| | Expansion ratio | [times] | 5.8 | 5.7 | 5.8 | 5.7 | 5.8 | 5.8 | 5.8 |
| | Open cell ratio | [%] | 3 | 4 | 12 | 4 | 14 | 19 | 18 |
| | Melting point | [°C] | 159.5 | 158.6 | 156.5 | 159.5 | 157.4 | 158.3 | 159.4 |
| | Take-up speed at break | [m/min] | 31.8 | 35.5 | 68.9 | 31.2 | 48.6 | 31.1 | 30.8 |
| | Number of peaks on DSC curve between 130°C and 170°C | | 1 | 1 | 1 | 1 | 1 | 1 | 1 |
| | Melting heat amount ratio on DSC curve between 130°C and 170°C (%) | | 97.1 | 92.6 | 91.8 | 93.3 | 92.3 | 94.8 | 94.4 |
| Molding condition | Moldable steam pressure range | [MPa] | 0.34-0.42 | 0.34-0.40 | 0.34-0.40 | 0.36-0.42 | 0.38-0.42 | 0.34-0.40 | 0.38-0.42 |
| | Moldability | | A | A | A | A | A | A | A |

(continued)

| Foam molded article | | | Ex.1 | Ex.2 | Ex.3 | Ex.4 | Ex.5 | Ex.6 | Ex.7 |
|---|---|---|---|---|---|---|---|---|---|
| Foam molded article | Density | [g/L] | 130 | 132 | 135 | 133 | 136 | 134 | 134 |
| | Density coefficient | | 1147 | 1178 | 1225 | 1194 | 1241 | 1210 | 1210 |
| | Compressive strength | [kPa] | 1470 | 1430 | 1250 | 1420 | 1250 | 1360 | 1450 |
| | Energy absorption performance | | Good | Good | Good | Good | Good | Good | Good |
| | Elongation at break | [%] | 10.3 | 11.2 | 13.3 | 10.2 | 10.8 | 11.5 | 10.3 |
| | Flexibility | | Good | Good | Good | Good | Good | Good | Good |

Table 3

| | | | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|
| Blend ratio of raw material resin (parts by mass) | Branched polypropylene | X | 100 | 90 | 30 | 90 | 30 | 90 | 80 |
| | Ethylene-propylene random copolymer | A | | 10 | 70 | | | | |
| | | B | | | | 10 | 70 | | |
| | | D | | | | | | 10 | 20 |
| | Total | | 100 | 100 | 100 | 100 | 100 | 100 | 100 |
| Extrusion expansion condition | First-stage temperature | [°C] | 210 | 210 | 210 | 210 | 210 | 210 | 210 |
| | $CO_2$ | [parts by mass] | 3 | 3 | 3 | 3 | 3 | 3 | 3 |
| | Second-stage temperature | [°C] | 185 | 185 | 170 | 185 | 170 | 185 | 180 |
| | Water pressure | [MPa] | 0.4 | 0.4 | 0.25 | 0.4 | 0.25 | 0.4 | 0.35 |
| Expanded particle | Bulk density | [g/L] | 90 | 90 | 90 | 90 | 90 | 90 | 90 |
| | Average cell diameter | [μm] | 180 | 190 | 310 | 190 | 350 | 180 | 200 |
| | Expansion ratio | [times] | 5.8 | 5.8 | 5.7 | 5.8 | 5.7 | 5.8 | 5.8 |
| | Open cell ratio | [%] | 2 | 3 | 35 | 3 | 39 | 12 | 23 |
| | Melting point | [°C] | 161.1 | 160.6 | 153.8 | 160.2 | 154.9 | 160.2 | 159.5 |
| | Take-up speed at break | [m/min] | 26.7 | 29.2 | Not fractured | 29.1 | Not fractured | 26.9 | 28.8 |
| | Number of peaks on DSC curve between 130°C and 170°C | | 1 | 1 | 1 | 1 | 1 | 1 | 1 |

EP 4 112 678 A1

(continued)

| | | | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|
| Molding condition | Moldable steam pressure range | [MPa] | 0.36-0.42 | 0.36-0.42 | Un-moldable | 0.36-0.42 | Un-moldable | 0.36-0.42 | 0.40-0.42 |
| | Moldability | | A | A | | A | | A | B |
| Foam molded article | Density | [g/L] | 130 | 130 | | 130 | | 131 | 132 |
| | Density coefficient | | 1147 | 1178 | | 1147 | | 1163 | 1178 |
| | Compressive strength | [kPa] | 1530 | 1500 | | 1490 | | 1500 | 1380 |
| | Energy absorption performance | | Good | Good | | Good | | Good | Good |
| | Elongation at break | [%] | 8.0 | 8.5 | | 8.0 | | 8.0 | 8.7 |
| | Flexibility | | Poor | Poor | | Poor | | Poor | Poor |

Table 4

| | | | Comp. Ex. 8 | Comp. Ex. 9 | Comp. Ex. 10 | Comp. Ex. 11 | Comp. Ex. 12 | Comp. Ex. 13 | Comp. Ex. 14 |
|---|---|---|---|---|---|---|---|---|---|
| Blend ratio of raw material resin (parts by mass) | Branched polypropylene | X | 70 | 90 | 80 | 70 | 90 | 80 | 70 |
| | Ethylene-propylene random copolymer | D | 30 | | | | | | |
| | Ethylene-butene-propylene random copolymer | F | | 10 | 20 | 30 | | | |
| | Ethylene-propylene block copolymer | G | | | | | 10 | 20 | 30 |
| | Total | | 100 | 100 | 100 | 100 | 100 | 100 | 100 |
| Extrusion expansion condition | First-stagp temperature | [°C] | 210 | 210 | 210 | 210 | 210 | 210 | 210 |
| | $CO_2$ | [parts by mass] | 3 | 3 | 3 | 3 | 3 | 3 | 3 |
| | Second-stage temperature | [°C] | 180 | 185 | 180 | 180 | 185 | 180 | 180 |
| | Water pressure | [MPa] | 0.3 | 0.4 | 0.4 | 0.35 | 0.4 | 0.35 | 0.25 |
| Expanded particle | Bulk density | [g/L] | 90 | 90 | 90 | 90 | 90 | 90 | 90 |
| | Average cell diameter | [μm] | 220 | 190 | 220 | 230 | 180 | 200 | 210 |
| | Expansion ratio | [times] | 5.7 | 5.8 | 5.7 | 5.8 | 5.7 | 5.7 | 5.8 |
| | Open cell ratio | [%] | 32 | 7 | 9 | 13 | 10 | 28 | 45 |
| | Melting point | [°C] | 159.2 | 160.2 | 159.1 | 158.9 | 161.7 | 162.1 | 162.7 |
| | Take-up speed at break | [m/min] | 30.1 | 28.7 | 33.6 | 43.1 | 28.2 | 32.1 | 40.4 |
| | Number of peaks on DSC curve between 130°C and 170°C | | 1 | 1 | 1 | 1 | 1 | 1 | 1 |

(continued)

| | | | Comp. Ex. 8 | Comp. Ex. 9 | Comp. Ex. 10 | Comp. Ex. 11 | Comp. Ex. 12 | Comp. Ex. 13 | Comp. Ex. 14 |
|---|---|---|---|---|---|---|---|---|---|
| Molding condition | Moldable steam pressure range | [MPa] | 0.42 | 0.36-0.42 | 0.36 | Un-moldable | 0.38-0.42 | 0.40-0.44 | Un-moldable |
| | Moldability | | C | A | C | | A | A | |
| Foam molded article | Density | [g/L] | 135 | 132 | 139 | | 130 | 133 | |
| | Density coefficient | | 1225 | 1178 | 1290 | | 1147 | 1194 | |
| | Compressive strength | [kPa] | 1220 | 1480 | 1230 | | 1410 | 1250 | |
| | Energy absorption performance | | Poor | Good | Poor | | Good | Good | |
| | Elongation at break | [%] | 9.8 | 9.1 | 10.5 | | 8.0 | 8.4 | |
| | Flexibility | | Poor | Poor | Good | | Poor | Poor | |

As is clear from the data shown in Table 2, in Examples 1 to 7, the obtained expanded particles contained, as the base resin, a polypropylene resin obtained by blending a branched propylene having a predetermined melt tension and an α-olefin-propylene random copolymer having a predetermined melting point and a predetermined MFR at a specific ratio, and thus had the following characteristics: there was a single melting peak in the temperature range from 130°C to 170°C in the first heating in differential scanning calorimetry performed on the expanded particles; the melting heat amount in the temperature range from 130°C to 170°C was 90.0% or more of the total melting heat amount; the melting point Tm2 was 155.0°C or higher and 160.0°C or lower; the take-up speed at break was 30.0 m/minute or more and 70.0 m/minute or less; and the open cell ratio was 30% or less. Furthermore, it was possible to produce foam molded articles having favorable energy absorption performance and high flexibility with high moldability using these expanded particles.

On the other hand, as is clear from the data shown in Table 3, in Comparative Example 1 in which an α-olefin-propylene random copolymer was not blended and Comparative Examples 2 and 4 in which a small amount of an α-olefin-propylene random copolymer was blended, the expanded particles had a melting point Tm2 of higher than 160.0°C and a take-up speed at break of less than 30.0 m/minute, and thus the foam molded articles produced using these expanded particles had a low elongation at break and poor flexibility In Comparative Examples 3 and 5 in which a large amount of an α-olefin-propylene random copolymer was blended, the expanded particles had a melting point Tm2 of lower than 155.0°C and an open cell ratio of more than 30%, and thus it was not possible to produce molded articles having an acceptable fusion rate and an acceptable surface smoothness even by increasing the steam pressure to 0.44 MPa (gauge pressure).

In Comparative Examples 6 and 7 in which an α-olefin-propylene random copolymer having an MFR of less than 5 g/10 minutes was used, the take-up speed at break was less than 30.0 m/minute, and thus the foam molded articles produced using the expanded particles had a low elongation at break and poor flexibility. In Comparative Example 8 in which an α-olefin-propylene random copolymer having an MFR of less than 5 g/10 minutes was used, the expanded particles had an open cell ratio of more than 30%, and thus the foam molded article had poor moldability, poor energy absorption performance, and poor flexibility

In Comparative Example 9 in which an α-olefin-propylene random oopolymer having a melting point of lower than 135°C was used, the take-up speed at break was less than 30.0 m/minute, and thus the foam molded article had poor flexibility In Comparative Example 10 in which an α-olefin-propylene random copolymer having a melting point of lower than 135°C was used, the molding temperature was much higher than the melting point of the random copolymer, and thus the open cell ratio may increase during the molding process. Furthermore, the obtained molded article shrank and had poor moldability and poor energy absorption performance. In Comparative Example 11 in which an α-olefin-propylene random copolymer having a melting point of lower than 135°C was used, the shrinkage of the molded article was more prominent, and it was not possible to produce molded articles having an acceptable fusion rate and an acceptable surface smoothness even by increasing the steam pressure to 0.44 MPa (gauge pressure).

In Comparative Examples 12 and 13 in which an ethylene propylene block polymer having an MFR of less than 5 g/10 minutes was used, the expanded particles had a melting point Tm2 of higher than 160.0°C, and thus the foam molded article had poor flexibility. In Comparative Example 14 in which an ethylene propylene block polymer having an MFR of less than 5 g/10 minutes was used, the expanded particles had a melting paint Tm2 of higher than 160.0°C and an open cell ratio of more than 30%, and thus it was not possible to produce molded articles having an acceptable fusion rate and an acceptable surface smoothness even by increasing the steam pressure to 0.44 MPa (gauge pressure).

**Claims**

1. Polypropylene resin expanded particles comprising a base resin that comprises a polypropylene resin,

   wherein the polypropylene resin comprises a propylene homopolymer having a branched structure in an amount of 40 mass% or more and 85 mass% or less, and an α-olefin-propylene random copolymer having a melting point of 135°C or higher and 155°C or lower in an amount of 15 mass% or more and 60 mass% or less,
   the polypropylene resin expanded particles have a single melting peak in a temperature range from 130°C to 170°C, and a melting heat amount in the temperature range from 130°C to 170°C is 90.0% or more of a total melting heat amount in first heating in differential scanning calorimetry,
   the polypropylene resin expanded particles have a melting point Tm2 of 155.0°C or higher and 160.0°C or lower, the melting point Tm2 being a melting peak value in second heating in differential scanning calorimetry,
   the polypropylene resin expanded particles have a take-up speed at break of 30.0 m/minute or more and 70.0 m/minute or less at a temperature of 200°C, and
   the polypropylene resin expanded particles have an open cell ratio of 30% or less.

**2.** The polypropylene resin expanded particles according to claim 1,
wherein the polypropylene resin expanded particles are extrusion-expanded particles.

**3.** The polypropylene resin expanded particles according to claim 1 or 2,
wherein the polypropylene resin expanded particles have a bulk density of 60 g/L or more and 300 g/L or less.

**4.** The polypropylene resin expanded particles according to any one of claims 1 to 3,
wherein the polypropylene resin expanded particles have an average cell diameter of 100 $\mu$m or more and 500 pm or less.

**5.** The polypropylene resin expanded particles according to any one of claims 1 to 4,
wherein the propylene homopolymer having a branched structure has a melt tension of 10 cN or more and 50 cN or less.

**6.** The polypropylene resin expanded particles according to any one of claims 1 to 5,
wherein the propylene homopolymer having a branched structure has a melt flow rate of 0.5 g/10 minutes or more and 5 g/10 minutes or less.

**7.** The polypropylene resin expanded particles according to any one of claims 1 to 6,
wherein the propylene homopolymer having a branched structure has a melting point of 150°C or higher and 165°C or lower.

**8.** The polypropylene resin expanded particles according to any one of claims 1 to 7,
wherein the $\alpha$-olefin-propylene random copolymer has a melt flow rate of 5 g/10 minutes or more and 50 g/10 minutes or less.

**9.** A method for producing polypropylene resin expanded particles, comprising:

melt-kneading a base resin comprising a polypropylene resin together with a nucleating agent and a blowing agent;
extruding a melt-kneaded product; and
cutting the extruded melt-kneaded product to obtain polypropylene resin expanded particles,
wherein the polypropylene resin comprises a propylene homopolymer having a branched structure in an amount of 40 mass% or more and 85 mass% or less, and an $\alpha$-olefin-propylene random copolymer in an amount of 15 mass% or more and 60 mass% or less,
the propylene homopolymer having a branched structure has a melt tension of 10 cN or more and 50 cN or less, and
the $\alpha$-olefin-propylene random copolymer has a melting point of 135°C or higher and 155°C or lower and a melt flow rate of 5 g/10 minutes or more and 50 g/10 minutes or less.

**10.** The method for producing polypropylene resin expanded particles according to claim 9,
wherein the nucleating agent comprises at least one selected from the group consisting of talc, sodium hydrogen carbonate, a mixture of sodium hydrogen carbonate and citric acid, monosodium citrate, and calcium carbonate.

**11.** The method for producing polypropylene resin expanded particles according to claim 9 or 10,
wherein the blowing agent comprises at least one selected from the group consisting of propane, butane, pentane, hexane, air, nitrogen, carbon dioxide, and water.

**12.** A polypropylene resin foam molded article comprised of polypropylene resin expanded particles,

wherein the polypropylene resin expanded particles are extrusion-expanded particles comprising a base resin that comprises a propylene homopolymer having a branched structure in an amount of 40 mass% or more and 85 mass% or less, and has an open cell ratio of 30% or less, and
the polypropylene resin foam molded article has a density D (g/L) of 60 g/L or more and 300 g/L or less, a compressive strength St (kPa) at 50% strain and the density D (g/L) satisfy Mathematical Relationship (1) below, and the polypropylene resin foam molded article has a elongation at break of 10% or more:

Mathematical Relationship (1)

$$St \geq 0.0000525 \times D^3 + 0.0581 \times D^2 - 0.0283 \times D + 157.42.$$

FIG. 1

FIG. 2

## INTERNATIONAL SEARCH REPORT

| | International application No. |
|---|---|
| | PCT/JP2021/004944 |

**A. CLASSIFICATION OF SUBJECT MATTER**
C08J 9/16(2006.01)i
FI: C08J9/16 CES

According to International Patent Classification (IPC) or to both national classification and IPC

**B. FIELDS SEARCHED**

Minimum documentation searched (classification system followed by classification symbols)
C08J9/16

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-256460 A (KANEKA CORP.) 05 November 2009 (2009-11-05) entire text | 1-12 |
| A | JP 11-80262 A (JSP CO., LTD.) 26 March 1999 (1999-03-26) entire text | 1-12 |
| A | WO 2018/016399 A1 (KANEKA CORP.) 25 January 2018 (2018-01-25) entire text | 1-12 |

☐ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 April 2021 (20.04.2021) | 11 May 2021 (11.05.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2021/004944

| Patent Documents referred in the Report | Publication Date | Patent Family | Publication Date |
|---|---|---|---|
| JP 2009-256460 A | 05 Nov. 2009 | (Family: none) | |
| JP 11-80262 A | 26 Mar. 1999 | (Family: none) | |
| WO 2018/016399 A1 | 25 Jan. 2018 | US 2019/0153188 A1 entire text | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015108033 A
- JP 51022951 B
- JP 53033996 B